Europäisches Patentamt

European Patent Office

Office européen des brevets

(11) Publication number: **0 276 896 B1**

# EUROPEAN PATENT SPECIFICATION

(45) Date of publication of patent specification: **29.12.93**   (51) Int. Cl.⁵: **G02B 13/00**, G11B 7/135

(21) Application number: **88200150.6**

(22) Date of filing: **28.01.88**

(54) **Optical information recording/reproducing apparatus.**

(30) Priority: **29.01.87 JP 20010/87**

(43) Date of publication of application:
**03.08.88 Bulletin  88/31**

(45) Publication of the grant of the patent:
**29.12.93 Bulletin  93/52**

(84) Designated Contracting States:
**DE FR GB IT NL**

(56) References cited:
**DE-A- 3 202 890**

**Patent Abstracts of Japan, vol. 11, no. 216
(P-595)(2663), July 14, 1987 & JP A 6235311**

**Patent Abstracts of Japan, vol. 10, no. 169
(P-468)(2225), June 14, 1986 & JP A 6120918**

**Patent Abstracts of Japan, vol. 11, no. 216
(P-595)(2663), July 14, 1987 & JP A 6235310**

(73) Proprietor: **CANON KABUSHIKI KAISHA
30-2, 3-chome, Shimomaruko,
Ohta-ku
Tokyo(JP)**

(72) Inventor: **Matsui, Hiroshi
15-4, Shinjo 3-chome
Nakahara-ku
Kawasaki-shi Kanagawa-ken(JP)**
Inventor: **Koyama, Osamu
309-2, Idanakanomachi
Nakahara-ku
Kawasaki-shi Kanagawa-ken(JP)**

(74) Representative: **Smulders, Theodorus A.H.J.,
Ir. et al
Vereenigde Octrooibureaux
Nieuwe Parklaan 97
NL-2587 BN 's-Gravenhage (NL)**

**Description**

The present invention relates to an optical information recording/reproducing apparatus comprising: means for directing a radiation beam to a recording medium; and means for detecting a beam from the recording medium, said means including a photodetector and a condensing optical system for condensing the beam from the recording medium onto said photodetector.

Such an apparatus is commonly known in this field.

In order to perform an optical recording or optical write access to an information recording medium, a beam spot modulated by information is applied on a surface of the medium to change optical characteristics of the medium, or reflected light is detected, which is modulated in accordance with the information recorded on the surface of the medium.

In order to achieve high-density information recording, 1-$\mu$m pits are aligned at high density along each track (track width: about 1.6 $\mu$m) on a surface of a medium such as an optical disk. Therefore, unless a light beam emitted from a light source such as a semiconductor laser is focused on the surface of the medium by a predetermined focusing lens, with having almost no aberration, accurate information recording/reproduction can hardly be achieved. In order to focus a beam spot at a desired position, even if a disturbance such as surface vibration upon rotation of an optical disk occurs, AF (auto focusing) and AT (auto tracking) must be performed and hence an actuator which can accurately drive an objective lens and a servo system for controlling the drive control of the actuator must be arranged.

An optical system used in an apparatus of this type is constituted by an objective lens system for forming a beam spot on the surface of a medium, and a lens system for condensing light onto a photodetector which is used for detecting information recorded on the medium and for detecting a servo signal for AF and AT control.

In the conventional objective lens system and the condensing lens system, aberrations are corrected well only with respect to a single oscillation wavelength inherent to a semiconductor laser serving as a light source.

However, when an ambient temperature changes or an output from the semiconductor laser changes, a wavelength of the laser beam emitted from the semiconductor laser is considerably changed. For this reason, changes in aberration (generation of aberrations) occur in the lens systems, and accurate information recording or reproduction cannot be performed.

JP-A-61.20918 discloses a specific design for correcting aberration in an objective lens.

Japanese Patent Laid-Open No. 3110/1986 discloses a technique wherein an achromatic lens is used in the objective lens system. However, the achromatic lens is merely designed such that light beams of two different wavelengths are focused at an identical position. Therefore, again, this technique cannot prevent an adverse influence on a servo detection system caused by changes in aberration in the condensing optical system due to fluctuations in wavelength.

In the conventional information recording/reproducing apparatus, servo control for AF and AT is unstable due to variations in wavelength. As a result, accurate information recording and reproduction have not yet been realized.

SUMMARY OF THE INVENTION

It is an object of the present invention to provide a condensing optical system which is free from the conventional drawbacks, and can accurately condense light reflected by an information recording medium onto a photodetector regardless of variations in wavelength.

It is another object of the present invention to provide an information recording/reproducing apparatus capable of accurate information recording and reproduction.

In order to achieve the above objects, the optical information recording/reproducing apparatus of the above-described type is characterized in that said condensing optical system is corrected for on-axis chromatic aberration by being constituted by a telescopic system including a first lens group and a second lens group, said first lens group having a positive refractive power $\psi_p$ and being arranged at a side of the recording medium and said second lens group having a negative refractive power $\psi_n$ and being arranged at a side of the photodetector, wherein for a normalised condensing optical system having a unit focal length the following relation is met:

$$-0.15 \quad < \quad \frac{\psi_p}{\nu_p} + \frac{\psi_n}{\nu_n} \quad < \quad 0$$

where

$\nu_p$    is Abbe's number of said first lens group and

$\nu_n$    is Abbe's number of said second lens group.

In the above, the refractive powers $\psi_p$ and $\psi_n$ are normalized according to the relations

$$\psi_p = \frac{1}{f_p/F} = F/f_p \qquad \psi_n = \frac{1}{f_n/F} = F/f_n$$

wherein

F    is the focal length of said condensing optical system,

$f_p$    = the focal length of the first lens group, and

$f_n$    = the focal length of the second lens group.

It is considered known per se to use an achromatic lens, for instance as objective lens of an optical information recording/ reproducing apparatus. An example of an achromatic lens is a doublet. Usually, doublets are thin optical systems wherein the respective paraxial ray incident heights are substantially equal. In these systems, the optimal value for

$$\frac{\psi_p}{\nu_p} + \frac{\psi_n}{\nu_n}$$

is zero.

In contrast, the condensing optical system according to the invention is constituted by a telescoping system, i.e. not thin, and according to the invention the optimal value for

$$\frac{\psi_p}{\nu_p} + \frac{\psi_n}{\nu_n}$$

is a negative value.

When each lens group is constituted by a plurality of lenses, a refracting power $\psi$ of each lens group is represented by a composite reflective power of the lenses, and the Abbe's number $\nu$ of each lens group can be regarded as a composite (average) Abbe's number of the Abbe's numbers of the lenses. In the following description, each lens group is regarded as a single lens.

The detailed aspects and other features of the present invention will be described in detail in the following embodiments.

BRIEF DESCRIPTION OF THE DRAWINGS

Figs. 1 and 2 are respectively a sectional view of a lens and a view showing aberrations in a focusing optical system according to a first embodiment of the present invention;

Figs. 3 and 4 are respectively a sectional view of a lens and a view showing aberrations in a focusing optical system according to a second embodiment of the present invention;

Figs. 5 and 6 are respectively a sectional view of a lens and a view showing aberrations in a focusing optical system according to a third embodiment of the present invention; and

Fig. 7 is a schematic view showing an information recording/reproducing apparatus having the focusing optical system of the present invention.

DETAILED DESCRIPTION OF THE PREFERRED EMBODIMENTS

In a semiconductor laser which is normally used as a light source in an optical information recording/reproducing apparatus, an oscillation wavelength is varied due to a change in temperature. In an optical information recording/reproducing apparatus in which such as an optomagnetic disk apparatus or a phase-change type after-write disk is used and which requires a plurality of modes, e.g., recording, reproducing, and erase modes, variations in wavelength due to a change in output from the semiconductor laser upon switching the modes occur.

According to the present invention, a condensing or focusing optical system for guiding light obtained from a surface of a medium through an objective lens toward a photodetector is constituted by first and second lens groups arranged from the side of the surface of the medium. The first lens group comprises a lens having a positive refracting power and the second lens group comprises a lens having a negative refracting power. These lenses have different Abbe's numbers.

In order to minimize a change in focal point of a light beam incident on a photodetector, i.e., a change in chromatic aberration when a wavelength of a light source changes, assume that the first lens group comprises a single convex lens and the second lens group comprises a single concave lens. In this case, if the Abbe's number of the single convex lens is given by $\nu_p$, and that of the single concave lens is given by $\nu_n$, the entire lens system need only satisfy the following relationship:

$\nu_p > 60, 35 > \nu_n$ (1)

Assuming that a third-order on-axis chromatic aberration coefficient is given by L, a refracting power of the single convex lens is given by $\psi_p$, and a refracting power of the single concave lens is given by $\psi_n$, if the lenses have small thicknesses, the coefficient L is represented by:

$$L = h_p \frac{\psi_p}{\nu_p} + h_n \frac{\psi_n}{\nu_n}$$

("Lens Design" written by Yoshiya Matsui, published by Kyoritsu Publishing Co.)
where $h_p$ and $h_n$ are respectively paraxial ray incident heights. If the coefficient L is reduced, the on-axis chromatic aberration can be corrected well. For this purpose, if the following condition is satisfied:

$$-0.15 < \frac{\psi_p}{\nu_p} + \frac{\psi_n}{\nu_n} < 0 \quad \ldots \ldots (2)$$

a focusing optical system, in which the chromatic aberration is well corrected, can be realized.

In order to render a recording/reproducing apparatus resistant against the variations in wavelength described above, a paraxial lateral magnification of the optical system extending from the surface of the medium to the photodetector must be increased. More specifically, a focal length of a condensing or focusing optical system for focusing, onto the photodetector, light obtained through the objective lens must be set as long as possible with respect to a focal length of the objective lens for forming a beam spot on the surface of the medium. According to the optical system of the present invention, the focusing optical system is constituted by a telescopic system consisting of the first lens group having the positive refracting power and the second lens group having the negative refracting power. With this arrangement, the entire system can be rendered compact, and the paraxial lateral magnification can be increased.

An embodiment of the present invention will be described hereinafter.

Tables 1, 2, and 3 respectively show first, second, and third embodiments of a focusing optical system of the present invention.

In Tables, Ri (i = 1, 2, 3, 4) is a radius of curvature of an ith surface numbered from the surface of the medium, Di (i = 1, 2, 3) is an axial interval between the ith and (i + 1)th surfaces numbered from the surface of the medium, Ni (i = 1, 2) is a refracting power of an ith lens numbered from the surface of the medium at a wavelength $\lambda$ = 820 nm, $\nu_i$ (i = 1, 2) is an Abbe's number of the ith lens, F is a focal length of the entire system (in this invention, F = 1.0), and FNO is an f-number.

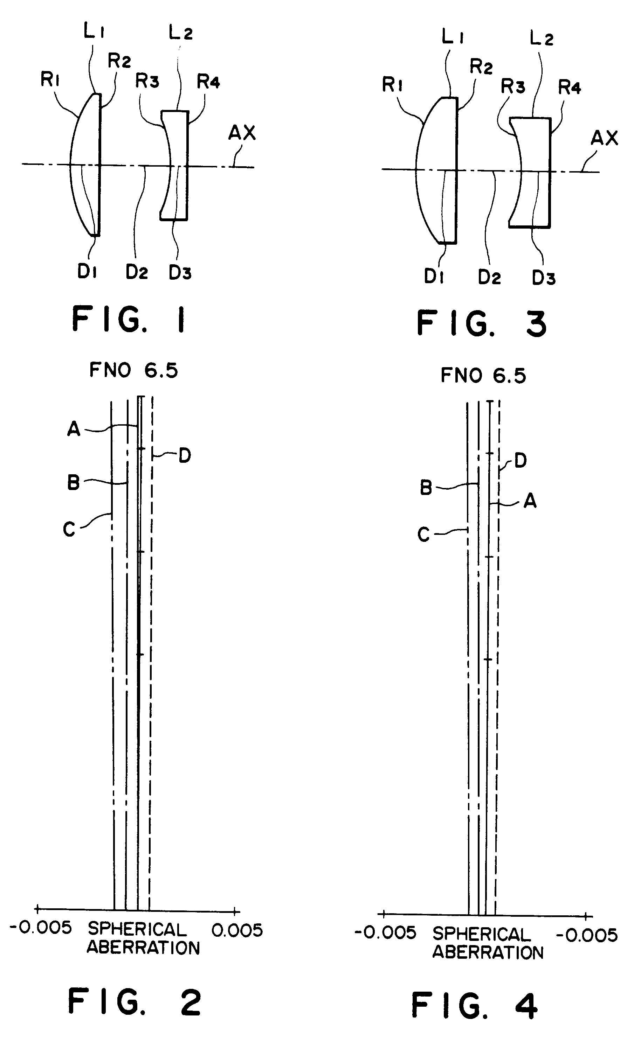

A curvature of the surface on the side of the medium of each of a first lens near the medium and a second lens near a photodetector is set to be larger than that of the surface on the side of the photodetector. The first lens comprises a bi-convex positive lens, and the second lens comprises a concave meniscus lens which has a concave surface facing the side of the medium. The first and second lenses

respectively correspond to $L_1$ and $L_2$ shown in Fig. 1 (to be described later).

TABLE 1

FNO = 6.5

F = 1.0

| R1 = 0.2469 | | | |
| R2 = -2.2838 | D1 = 0.06 | N1 = 1.59538 | ν1 = 60.7 |
| R3 = -0.2486 | D2 = 0.14 | | |
| R4 = -12.6866 | D3 = 0.03 | N2 = 1.76359 | ν2 = 25.7 |

TABLE 2

FNO = 6.5

F = 1.0

| R1 = 0.2351 | | | |
| R2 = -2.8120 | D1 = 0.09 | N1 = 1.61049 | ν1 = 63.4 |
| R3 = -0.2259 | D2 = 0.12 | | |
| R4 = -4.5216 | D3 = 0.05 | N2 = 1.82234 | ν2 = 23.9 |

5

TABLE 3

FNO = 6.6

F = 1.0

| R1 = 0.2440 | D1 = 0.09 | N1 = 1.49225 | ν1 = 81.6 |
| R2 = -1.0764 | D2 = 0.13 | N2 = 1.71032 | ν2 = 28.5 |
| R3 = -0.2260 | D3 = 0.08 | | |
| R4 = -1.0788 | | | |

Figs. 1, 3, and 5 are sectional views of lenses of the focusing optical systems of the embodiments shown in Tables 1 to 3. Figs. 2, 4, and 6 show spherical aberrations with respect to a plurality of wavelengths of the focusing optical systems shown in Figs. 1, 3, and 5, respectively.

In the sectional view of the lenses, $L_1$ represents a first lens group having a positive refracting power, $L_2$ represents a second lens group having a negative refracting power, and AX represents an optical axis. In addition, Ri (i = 1, 2, 3, 4) and Di (i = 1, 2, 3) are symbols corresponding to the above-mentioned lens data.

According to the focusing optical system of this embodiment, the first lens group $L_1$ comprises a single convex lens, and is arranged at the side of the surface of a medium (not shown). The second lens group $L_2$ comprises a single concave lens, and is arranged at the side of a photodetector (not shown).

In this embodiment, each of the lens groups $L_1$ and $L_2$ respectively comprises a single lens, but may comprise a plurality of lenses. However, if each lens group comprises a single lens like in this embodiment, assembly and adjustment can be facilitated, and cost can be reduced, resulting in practical advantages.

In Figs. 2, 4, and 6, A represents a spherical aberration curve with respect to a wavelength of 820 nm, B represents a spherical aberration curve with respect to a wavelength of 800 nm, C represents a spherical aberration curve with respect to a wavelength of 780 nm, and D represents a spherical aberration curve with respect to a wavelength of 840 nm.

As can be seen from Figs. 2, 4, and 6, according to the present invention, a focusing optical system, in which the on-axis or axial chromatic aberration is satisfactorily corrected, can be provided. Therefore, even if variations in wavelength of the light source occurs, variations in aberration in the optical system can be minimized.

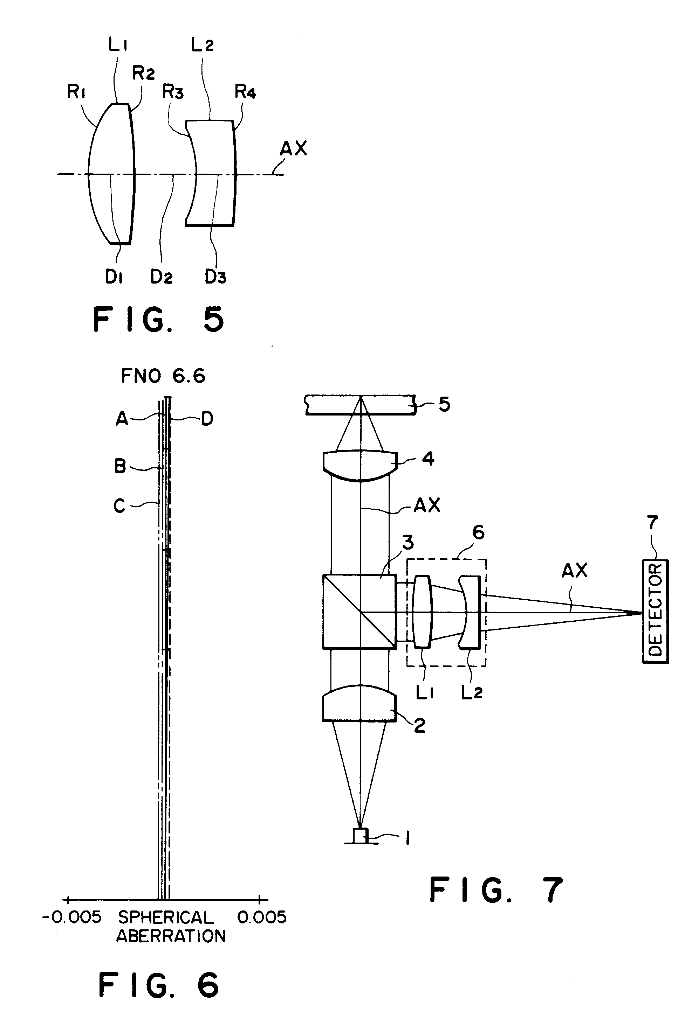

Fig. 7 is a schematic view of an optical information recording/reproducing apparatus comprising the focusing optical system of the present invention.

The information recording/reproducing apparatus shown in Fig. 7 includes a semiconductor laser 1, a collimator lens 2, a beam splitter 3, an objective lens 4, an information recording medium (e.g., optical disk) 5, a condensing or focusing lens 6, and a photodetector 7.

The focusing lens 6 comprises a lens system shown in any one of Figs. 1, 3, and 5. The chromatic aberration of the focusing lens 6 is corrected as well as various aberrations within the range of a change in oscillation wavelength of the laser 1.

The objective lens 4 shown in Fig. 7 comprises a single aspherical lens. The lens 4 may employ an optical system disclosed in U.S. Pat. No.4,657,352 (the same assignee as this application). These optical systems comprise an objective lens having one aspherical surface. However, an optical system comprising a double-aspherical surface lens or a plurality of lens elements may be employed. Not only a uniform medium optical system but also a so-called "gradient index lens" having a refracting index distribution in the medium can be used.

A divergent laser beam emitted from the semiconductor laser 1 is collimated to a parallel laser beam by the collimator lens 2, and is then directed toward the beam splitter 3.

The parallel laser beam passing through the beam splitter 3 is incident on the objective lens 4, and is thereby converted to a convergent laser beam. Then, the convergent laser beam is focused on the information recording surface of the information recording medium 5.

The laser beam reflected by the information recording surface of the information recording medium 5 is directed toward the beam splitter 3 through the objective lens 4, and is then reflected by the beam splitter 3.

The laser beam reflected by the beam splitter 3 is focused on the photodetector 7 through the focusing optical system 6.

The focusing optical system 6 comprises two lenses. Since the chromatic aberration is corrected well, as described above, even if the oscillation wavelength of the semiconductor laser 1 is changed, the focusing optical system 6 can always focus the laser beam reflected by the information recording medium 5 onto the photodetector 7 in the best state.

Therefore, a focusing error signal or a tracking signal output from the photodetector 7 in accordance with the incident state of the reflected laser beam onto the photodetector 7 is always accurate and stable. For this reason, reliability of a recording/reproducing system can be greatly improved, and information recording/reproduction can be accurately performed.

As a method of detecting the focusing error signal or the tracking signal, various known methods are employed. The objective lens 4 is moved along the optical axis AX and in a direction perpendicular to the optical axis AX based on these signals. Drive control of the objective lens 4 is performed by an objective lens drive mechanism (not shown), so that the laser beam is accurately focused on the surface of the information recording medium, and a laser beam spot is accurately formed on a predetermined track on the surface of the information recording medium. Such AF servo and AT servo are executed by a servo system of a control apparatus (not shown). The servo system is operated upon reception of the output signals from the photodetector 7.

When information is to be recorded on a track of the recording surface of the information recording medium 5, a driver (not shown) of the semiconductor laser 1 is controlled in accordance with the signal corresponding to information to be recorded, such that the laser beam emitted from the semiconductor laser 1 is turned on or off to form information bits along the track. In this case, the information recording medium 5 is moved (rotated) in a direction along the track. In addition, AF and AT are performed for the recording surface.

When information recorded on the recording surface of the information recording medium is to be reproduced, the laser beam having a lower intensity than that in the recording mode is emitted from the semiconductor laser 1, and the beam reflected by the bits of the track on the recording surface is detected by the photodetector 7 through the objective lens 4, the beam splitter 3, and the focusing optical system 6. The photodetector 7 outputs a signal corresponding to the recorded information. In this case, the information recording medium 5 is also moved (rotated) in a direction along the track. In addition, AF and AT are performed.

7

According to the present invention, since the recording and reproducing operations described above are performed in accordance with the accurate output signal from the photodetector 7, a highly reliable, high-performance optical information recording/reproducing apparatus can be provided.

In the apparatus shown in Fig. 7, the objective lens 4 may comprise an achromatic lens which is subjected to chromatic-aberration correction within substantially the same wavelength range as the focusing optical system 6. In this case, the objective lens 4 may comprise a composite single lens disclosed in Japanese Patent Laid-Open No. 3110/1986, so that the objective lens 4 can be rendered compact and light in weight. Therefore, a load for a drive mechanism of the objective lens 4 can be reduced, and high-speed AF and AT can be realized. Since both the objective lens 4 and the focusing optical system 6 are subjected to chromatic-aberration correction, a system which is resistant and stable against variations in wavelength of the light source can be constructed.

The collimator lens 2 normally comprises an optical system consisting of a few spherical lenses or an aspherical lens or gradient index lens similarly to the objective lens 4.

An achromatic optical system combining the collimator lens 2 and the objective lens 4 may be provided. With this system, the objective lens 4 need not comprise a complex optical system such as a composite lens. Of course, also in this case, a system which is resistant to variations in wavelength of the light source can be constructed in cooperation with the effect of the focusing optical system mentioned above.

The typical embodiments of the present invention have been described in detail. It is deemed easy to those skilled in the art to design various focusing optical systems based on the principle of the present invention. Therefore, the present invention is not limited to the embodiments described above, and can provide various other focusing optical systems and optical information recording/reproducing apparatuses.

The focusing optical system according to the present invention is an optical system, in which the aberrations are corrected with respect to a plurality of wavelengths. For this reason, light from a surface of the information recording medium can always be satisfactorily focused on the photodetector regardless of variations in wavelength of the light source.

Therefore, an optical information recording/reproducing apparatus which is free from an influence of variations in wavelength of the light source can be provided, and highly accurate servo control such as AF and AT can be performed in the recording/reproducing mode.

## Claims

1. An optical information recording/reproducing apparatus comprising:
   means for directing a radiation beam to a recording medium (5); and means for detecting a beam from the recording medium, said means including a photodetector (7) and a condensing optical system (6) for condensing the beam from the recording medium onto said photodetector;
   **characterized** in that said condensing optical system is corrected for on-axis chromatic aberration by being constituted by a telescopic system including a first lens group ($L_1$) and a second lens group ($L_2$), said first lens group having a positive refractive power $\psi_p$ and being arranged at a side of the recording medium and said second lens group having a negative refractive power $\psi_n$ and being arranged at a side of the photodetector, wherein for a normalised condensing optical system having a unit focal length the following relation is met:

$$-0.15 \ < \ \frac{\psi_p}{\nu_p} + \frac{\psi_n}{\nu_n} \ < \ 0$$

   where
   $\nu_p$  is Abbe's number of said first lens group and
   $\nu_n$  is Abbe's number of said second lens group.

2. An apparatus according to claim 1, wherein said directing means includes a collimator lens (2) for forming a parallel beam, an objective lens (4) for receiving the parallel beam to focus it on the recording medium, and a beam splitter (3) disposed in a path of the parallel beam between said collimator lens and said objective lens, and said condensing optical system is so arranged as to receive a beam reflected by the recording medium and made generally parallel by said objective lens through said beam splitter.

3. An optical information recording/reproducing apparatus according to claim 1; wherein said directing means comprise a collimating lens for collimating a laser beam from a laser (1), and an objective lens for focusing a beam from said collimating lens on the recording medium; wherein said detecting means are adapted for detecting a beam reflected by the recording medium through said objective lens; wherein said photodetector generates at least one of a focusing error signal, for indicating a focus error of the laser beam relative to the recording medium, and a tracking error signal, for indicating a tracking error of the laser beam relative to the recording medium; and wherein the following relation is met:

$$\nu_p > 60, 35 > \nu_n$$

4. An apparatus according to claim 3, wherein the focal length of said condensing optical system is larger than that of said objective lens.

5. An apparatus according to claim 3, wherein said directing means includes a beam splitter disposed between said collimating lens and said objective lens, and said detecting means detects the reflected beam through said beam splitter.

6. An apparatus according to claim 1, wherein said photodetector generates at least one of a signal for indicating a focus error of the radiation beam relative to the recording medium and a signal for indicating a tracking error of the radiation beam relative to the recording medium, responsive to the beam condensed thereon by said condensing optical system.

7. An apparatus according to claim 6, wherein said directing means includes a semiconductor laser and directs a radiation beam from said laser to the recording medium, and the following relation is met:

$$\nu_p > 60, 35 > \nu_n$$

8. An apparatus according to claim 6, wherein said first and second lens groups respectively consist of a single lens element.

## Patentansprüche

1. Optisches Informations-Aufnahme/-Wiedergabegerät mit:
   einer Einrichtung zum Führen eines Strahles einer Strahlung zu einem Aufnahmeträger (5), und
   einer Einrichtung zum Detektieren eines Strahles vom Aufnahmeträger, wobei die Einrichtung
   einen Fotodetektor (7) und ein zusammenführendes, optisches System (6) zum zusammenfuhren des Strahles vom Aufnahmeträger auf den Fotodetektor hat;
   dadurch gekennzeichnet, daß
   das zusammenführende, optische System für eine axiale, chromatischen Abberation korrigiert wird, indem es durch ein Teleskopsystem einschließlich einer ersten Linsengruppe ($L_1$) und einer zweiten Linsengruppe ($L_2$) gebildet ist, wobei die erste Linsengruppe eine positive Brechkraft $\psi_p$ hat und an einer Seite des Aufnahmeträgers angeordnet ist, und die zweite Linsengruppe eine negative Brechkraft $\psi_n$ hat und an einer Seite des Fotodetektors angeordnet ist, wobei für ein normalisiertes, zusammenführendes, optisches System mit einer Systembrennweite die folgende Beziehung zutrifft:

$$-0.15 < \frac{\psi_p}{\nu_p} + \frac{\psi_n}{\nu_n} < 0$$

wobei $\nu_p$ die Abbesche Zahl der ersten Linsengruppe ist, und
$\nu_n$ die Abbesche Zahl der zweiten Linsengruppe ist.

2. Gerät gemäß Anspruch 1, wobei die Einrichtung zum Führen eine Kollimatorlinse (2) zur Bildung eines parallelen Strahls, eine Objektivlinse (4) zum Empfang des parallelen Strahls, um diesen auf den Aufnahmeträger zu fokusieren, und einen Strahlenteiler (3), der auf einem Weg des parallelen Strahles zwischen der Kollimatorlinse und der Objektivlinse angeordnet ist, und wobei das zusammenführende, optische System angeordnet ist, um einen Strahl vom Strahlenteiler zu empfangen, der vom Aufnahmeträger reflektiert wurde und durch die Objektivlinse im wesentlichen parallel ausgerichtet wurde.

**3.** Optisches Informations Aufnahme/-Wiedergabegerät gemäß Anspruch 1,

wobei die Einrichtung zum Führen eine Kollimatorlinse zum Parallel-Ausrichten eines Laserstrahles eines Lasers (1) und eine Objektivlinse zum Fokusieren eines Strahles von einer Kollimatorlinse auf den Aufnahmeträger hat,

wobei die Einrichtung zum Detektieren dazu geeignet ist, einen durch den Aufnahmeträger reflektierten Strahl durch die Objektivlinse zu detektieren,

wobei der Fotodetektor zumindest ein Fokusierfehlersignal zur Anzeige eines Fokusierfehlers des Laserstrahles bezüglich dem Aufnahmeträger oder ein Nachführfehlersignal zur Anzeige eines Nachführfehlers des Laserstrahles bezüglich dem Anfnahmeträger erzeugt, und

wobei die folgende Beziehung erfüllt ist:

$\nu_p > 60, 35 > \nu n$

**4.** Gerät gemäß Anspruch 3, wobei die Brennweite des zusammmenführenden, optischen Systems größer als die der Objektivlinse ist.

**5.** Gerät gemäß Anspruch 3,

wobei die Einrichtung zum Führen einen Strahlenteiler hat, der zwischen der Kollimatorlinse und der Objektivlinse angeordnet ist, und

wobei die Einrichtung zum Detektieren den vom Strahlenteiler reflektierten Strahl detektiert.

**6.** Gerät gemäß Anspruch 1, wobei der Fotodetektor zumindest ein Signal zur Anzeige eines Fokusierfehlers des Strahles einer Strahlung bezüglich dem Aufnahmeträger oder ein Signal zur Anzeige eines Nachführfehlers des Strahles einer Strahlung bezüglich dem Aufnahmeträger erzeugt, der gegenüber dem Strahl, der durch das zusammenführende, optische System darauf zusammengeführt ist, empfindlich ist.

**7.** Gerät gemäß Anspruch 6, wobei die Einrichtung zum Führen einen Halbleiterlaser hat und einen Strahl einer Strahlung vom Laser zum Aufnahmeträger führt, und die folgende Beziehung erfüllt ist:

$\nu_p > 60, 35 > \nu n$

**8.** Gerät gemäß Anspruch 6, wobei die erste und die zweite Linsengruppe jeweils aus einem einzelnen Linsenelement bestehen.

**Revendications**

**1.** Appareil d'enregistrement/reproduction d'informations optiques, comportant :

des moyens pour diriger un faisceau de rayonnement sur un support (5) d'enregistrement ; et

des moyens pour détecter un faisceau provenant du support d'enregistrement, lesdits moyens comprenant un photodétecteur (7) et un système optique (6) de condensation pour condenser le faisceau provenant du support d'enregistrement sur ledit photodétecteur ;

caractérisé en ce que ledit système optique de condensation est corrigé en aberration chromatique sur l'axe en étant constitué par un système télescopique comprenant un premier groupe de lentilles ($L_1$) et un second groupe de lentilles ($L_2$), ledit premier groupe de lentilles ayant un pouvoir de réfraction positif $\psi_p$ et étant disposé sur un côté du support d'enregistrement et ledit second groupe de lentilles ayant un pouvoir de réfraction négatif $\psi_n$ et étant disposé sur un côté du photodétecteur, appareil dans lequel, pour un système optique normalisé de condensation ayant une longueur focale unité, la relation suivante est satisfaite :

$$-0,15 < \frac{\Psi_p}{v_p} + \frac{\Psi_n}{v_p} < 0$$

où $v_p$ est le nombre d'Abbe dudit ledit premier groupe de lentilles et

$v_n$ est le nombre d'Abbe dudit second groupe de lentilles.

2. Appareil selon la revendication 1, dans lequel lesdits moyens de direction comprennent une lentille collimatrice (2) destinée à former un faisceau parallèle, une lentille d'objectif (4) destinée à recevoir le faisceau parallèle pour le focaliser sur le support d'enregistrement, et un diviseur (3) de faisceau disposé sur un trajet du faisceau parallèle entre ladite lentille de collimateur et ladite lentille d'objectif, et ledit système optique de condensation est disposé de manière à recevoir un faisceau réfléchi par le support d'enregistrement et rendu globalement parallèle par ladite lentille d'objectif à travers ledit diviseur de faisceau.

3. Appareil d'enregistrement/reproduction d'informations optiques selon la revendication 1,

dans lequel lesdits moyens de direction comprennent une lentille collimatrice destinée à collimater un faisceau laser provenant d'un laser (1), et une lentille d'objectif destinée à focaliser un faisceau provenant de ladite lentille collimatrice sur le support d'enregistrement ;

dans lequel lesdits moyens de détection sont conçus pour détecter un faisceau réfléchi par le support d'enregistrement à travers ladite lentille d'objectif ; dans lequel ledit photodétecteur génère au moins l'un d'un signal d'erreur de focalisation, pour indiquer une erreur de focalisation du faisceau laser par rapport au support d'enregistrement, et d'un signal d'erreur de suivi, pour indiquer une erreur de suivi du faisceau laser par rapport au support d'enregistrement ; et

dans lequel la relation suivante est satisfaite :

$$v_p > 60, \quad 35 > v_n$$

4. Appareil selon la revendication 3, dans lequel la longueur focale dudit système optique de condensation est plus grande que celle de ladite lentille d'objectif.

5. Appareil selon la revendication 3, dans lequel lesdits moyens de direction comprennent un diviseur de faisceau disposé entre ladite lentille collimatrice et ladite lentille d'objectif, et lesdits moyens de détection détectent le faisceau réfléchi à travers ledit diviseur de faisceau.

6. Appareil selon la revendication 1, dans lequel ledit photodétecteur génère au moins l'un d'un signal pour indiquer une erreur de focalisation du faisceau de rayonnement par rapport au support d'enregistrement et d'un signal pour indiquer une erreur de suivi du faisceau de rayonnement par rapport au support d'enregistrement, en réponse au faisceau condensé sur le photodétecteur par ledit système optique de condensation.

7. Appareil selon la revendication 6, dans lequel lesdits moyens de direction comprennent un laser à semiconducteur et dirigent un faisceau de rayonnement provenant dudit laser sur le support d'enregistrement, et la relation suivante est satisfaite :

$$v_p > 60, \quad 35 > v_n$$

8. Appareil selon la revendication 6, dans lequel lesdits premier et second groupes de lentilles sont constitués respectivement d'un élément à lentille unique.

FIG. 1

FIG. 3

FNO 6.5

-0.005  SPHERICAL  0.005
ABERRATION

FIG. 2

FNO 6.5

-0.005  SPHERICAL  -0.005
ABERRATION

FIG. 4

F I G. 5

FNO 6.6

-0.005 SPHERICAL 0.005
ABERRATION

F I G. 6

F I G. 7